# EUROPEAN PATENT APPLICATION

(11) **EP 3 828 228 A1**
(43) Date of publication of application: **02.06.2021**
(21) Application number: 19212430.3
(22) Date of filing: 29.11.2019
(51) Int. Cl.: C08J 7/02, C08J 11/00, C11D 7/08, C11D 7/26, C11D 7/50, C11D 11/00, C09D 9/00, D21C 5/02

(54) **METHOD FOR REMOVING FOREIGN MATERIALS FROM THE SURFACE OF AN ARTICLE**

(71) Applicant: Borealis AG, 1220 Vienna (AT)
(72) Inventor: JONES, Simon Anthony, 1220 Wien (AT); PIETTRE, Kilian, 4021 Linz (AT); VIJAY, Sameer, 4021 Linz (AT)
(74) Representative: Maiwald Patent- und Rechtsanwaltsgesellschaft mbH

(57) **Abstract**

The present invention relates to a method for removing a foreign material from the surface of an article comprising the following steps: i) providing an article having a surface covered at least partly with a foreign material; ii) contacting the article provided in step i) with a cleaning medium being an acid having a pKa in the range from -10 to 7 having a minimum concentration of 1 wt.-% and/or an amphoter and with a carrier medium having a density different from the density of the cleaning medium to obtain a mixture comprising the foreign material solved and/or dispersed in the cleaning medium, the carrier medium and the article free from the foreign material; iii) allowing the mixture obtained in step ii) to separate to obtain a heterophasic emulsion comprising at least a first phase comprising the carrier medium and the article free from the foreign material and a second phase comprising the cleaning medium and the foreign material solved and/or dispersed therein; iv) separating the phases obtained in step iii); and v) separating the article free from the foreign material from the carrier medium. Furthermore, the present invention relates to an installation for carrying out the inventive process.

## Description

The present invention relates to a method for removing a foreign material, for example ink, from the surface of an article and to an installation for conducting said method.

From the prior art some methods for removing ink from plastic materials are already known.

EP 2 832 459 A1 relates to a method for removing ink printed on a plastic film comprising various physical/chemical treatments. The main steps in the method are: conditioning the material, grinding, removing ink from the film, washing the film, recovering the cleaning solution, recovering the pigment and drying the film. As a result of the method, it is possible to obtain, on one hand, a plastic film free of ink and, on the other hand, the pigment.

WO 2012/151291 A2 refers to an apparatus and a method for removing an ink image from a plastic substrate, particularly a plastic container such as a cup. A solvent capable of solvating the ink image is utilized in order to de-ink articles so that they can be recycled and re-imprinted thereby reducing waste associated with printing line start up.

In the recycling of plastic, the material is typically in a flaked or ground pellet form. Typically, the resulting clean plastic particles will have a residual moisture of anywhere between 10 wt.-% and 30 wt.-%. This residual moisture has to be washed out of the plastic, entailing substantial losses of the cleaning medium, and by consequence significant waste water streams requiring chemical and/or mechanical and/or biological treatment.

Additionally, current plastics recycling processes are typically able to achieve a yield of around 50 % for input streams containing 90 % plastic. The resulting waste stream contains most of the foreign material, but also significant quantities of plastic. This stream has typically a high water content and is usually incinerated at high cost.

Furthermore, the methods known from the prior art for removing ink from a substrate refer to the use of a combination of several components comprising alcohols, anionic and cationic surfactants and solvents.

The known methods have some disadvantages. The efficiency of a process for removing foreign material is a direct consequence of the concentration of the components used in the cleaning medium and deviations in the mixture affect the efficiency of removing foreign material. Furthermore, due to the requirement of a specific combination of components, the complexity of the process increases when these solutions are intended for reuse in the process after cleaning. In addition, the cleaning media known from the prior art are quite expensive and the processes have to be conducted at elevated temperatures.

It was therefore an objective of the present invention to provide a method that allows to use a simple mixture of components or a single component for removing foreign material from the surface of an article. The advantages of using such a simple mixture or a single component, this means a cleaning medium based on cheap readily available materials, include reduced complexity resulting in a lower price. Furthermore, it was an objective of the present invention to provide a method that neutralizes odor, which is particularly preferable when the article is a waste material. In addition, it was an object of the present invention to provide a method which is not limited with regard to the articles used, that works for example for flakes, films and chips but also for more complex packaging structures. It was also an objective of the present invention to provide a method being extremely efficient and allowing to recover and re-use the desired materials, not only the article, but also the cleaning medium and the carrier material, to a huge extent or a total recovery. Another objective of the present invention was to provide a method that allows to remove foreign materials from the surface of an article without harming the internal structure of the article. Furthermore, it was the objective of the present invention to provide a method which generates only a little amount of waste water and solid waste per ton of cleaned product.

These objectives have been solved by the method for removing foreign material from the surface of an article according to claim 1 comprising the following steps:
i) providing an article having a surface covered at least partly with a foreign material;
ii) contacting the article provided in step i) with a cleaning medium being an acid having a pKa in the range from -10 to 7 having a minimum concentration of 1 wt.-% and/or an amphoter and with a carrier medium having a density different from the density of the cleaning medium to obtain a mixture comprising the foreign material solved and/or dispersed in the cleaning medium, the carrier medium and the article free from the foreign material;
iii) allowing the mixture obtained in step ii) to separate, to obtain a heterophasic emulsion comprising at least a first phase comprising the carrier medium and the article free from the foreign material and a second phase comprising the cleaning medium and the foreign material solved and/or dispersed therein;
iv) separating the phases obtained in step iii); and
v) separating the article free from the foreign material from the carrier medium.

Advantageous embodiments of the method in accordance with the present invention are specified in the dependent claims 2 to 14. Claim 15 relates to an installation for conducting the method according to the present invention.

### Definitions

For the purposes of the present description and of the subsequent claims, the term "acid" means the aqueous solutions of the "acid" or the pure "acid". This means the "acid" may contain water and preferably contains waters. An "acid" is a substance that acts as a proton donor in aqueous solutions.

The acid may be monoprotic or multiprotic or a mixture thereof. In the gist of the present invention for multiprotic acids the "pKa" (logarithmic acid dissociation constant) refers to the first dissociation step of the acid.

In the spirit of the present invention an ink is a liquid or paste that comprises inorganic or organic pigments or dyes and a solvent. The ink may additionally comprise resins, lubricants, solubilizers, surfactants, particulate matter, fluorescents, and other materials.

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

### Method

In the following preferred embodiments of the method according to the present invention will be discussed.

According to a preferred embodiment of the present invention the article in step ii) is first contacted with the cleaning medium and afterwards with the carrier medium, preferably the article is first contacted with the cleaning medium until the foreign material is completely solved or dispersed in the cleaning medium.

Another preferred embodiment of the present invention stipulates that the article in step ii) is contacted simultaneously with the cleaning medium and the carrier medium.

In principle, the invention can be carried out for any foreign material which is soluble in the acid or the amphoter as applied in step ii) of the method according to the present invention, or reacts with the acid or the amphoter to become a soluble substance.

The skilled person is well aware that minor amounts of the foreign material may remain in the carrier medium and minor amounts of the article to be cleaned may remain in the cleaning medium, preferably the amount of the foreign material remaining in the carrier medium is below 0.5 wt.-% and preferably from 0.01 to 0.4 wt.-% based on the overall weight of the foreign material and the amount of the article to be cleaned remaining in the cleaning medium is below 0.5 wt.-% and preferably from 0.01 to 0.4 wt.-% based on the overall weight of the article to be cleaned.

According to one preferred embodiment according to the present invention the foreign material is selected from the group consisting of ink, labels, paper, paper board, carton board, mono- or multilayer films, organic coatings, inorganic coatings, preferably vapour deposed metallic materials and non-metallic materials or aluminium, pigments, adhesives, glues, metals, organic waste, non-organic waste, odorous materials and mixtures thereof.

The method can also be conducted for multi-layered articles and the foreign material may form a separate layer. In a preferred embodiment, the method is used for separating multi-layered articles.

Still another preferred embodiment of the present invention stipulates that the mixture comprising the cleaning medium and the article is subjected to sheer forces induced by mechanical mixing, preferably by agitation, pump-around loop, mechanical grinding, extrusion, addition of abrasive agents and/or is treated with ultrasound before contacting the article with the carrier medium.

In a further preferred embodiment of the present invention the mixture comprising cleaning medium, carrier medium and article is subjected to sheer forces induced by mechanical mixing, preferably by agitation, pump-around loop, mechanical grinding, extrusion, addition of abrasive agents and/or is treated with ultrasound before step iii).

According to another preferred embodiment in accordance with the present invention an agent for breaking the emulsion, preferably water is/are added before or during step iv).

According to a preferred embodiment in accordance with the present invention the density of the carrier medium is lower than the density of the cleaning medium.

Another preferred embodiment of the present invention stipulates that the cleaning medium is an acid, preferably selected from the group consisting of oleum, sulphuric acid, phosphoric acid, nitric acid, hydrochloric acid, hydrofluoric acid, boric acid, adipic acid, formic acid, acetic acid and mixtures thereof and preferably is sulphuric acid.

In another preferred embodiment the carrier medium is an oil preferably selected from the group consisting of mineral oil, silicon oil, vegetable oil and mixtures thereof and more preferably is mineral oil. According to a further preferred embodiment the carrier medium is an organic solvent, preferably cyclohexane.

According to a preferred embodiment the density of the carrier medium (at 20°C) is in the range of 300 to 1200 kg/m³, preferably of 500 to 1000 kg/m³ and more preferably in the range of 600 to 950 kg/m³.

In principle, the invention can be carried out for all articles being resistant against the cleaning medium as applied in step ii) of the method according to the present invention. In a preferred embodiment at least a part of the surface of the article comprises a polymer, preferably the surface of the article consists of a polymer, and most preferably the whole article consists of a polymer, whereby said polymer is preferably selected from the group consisting of polyolefins, preferably polyethylene and/or polypropylene, polyvinyl chloride, polyethylene terephthalate, polyamides, preferably PA 6, PA 66 and mixtures thereof. According to a further preferred embodiment of the present invention at least a part of the surface of the article comprises a material selected from the group consisting of glass, ceramics, steel, deposited films, preferably metallized films and mixtures thereof.

Still another preferred embodiment of the present invention stipulates that the article originates from post-consumer waste or post-industrial waste, post-commercial waste and preferably is provided in shredded form, flaked form or pelletized form.

In a further preferred embodiment in accordance with the present invention the density difference between the carrier medium and the cleaning medium is at least 550 kg/m³, preferably in the range from 500 to 1800 kg/m³ and more preferably in the range from 650 to 1000 kg/m³.

Another preferred embodiment of the present invention stipulates that the cleaning medium is an acid and has a concentration in the range from 10 to 100 wt.-% (corresponds for sulphuric acid to a molarity of 1.8 M to 18.65 M), preferably from 45 to 98 wt.-% (corresponds for sulphuric acid to a molarity of 6.2 M to 18.4 M) and more preferably is sulphuric acid having a concentration of 94 to 98 wt.-% .-% (corresponds to a molarity of 17.8 M to 18.4 M), more preferably having a concentration of 96 wt.-% (corresponds to a molarity of 18.4 M).

In another preferred embodiment of the present invention, the pKa of the acid is in the range from -5 to 5 and preferably from -5 to 0.

According to still a further preferred embodiment of the present invention the minimum concentration of the acid used as cleaning medium is 10 wt.-% and preferably is 25 wt.-%.

The invention can be carried out by applying more than one acid in step ii). The above-mentioned concentration and pKa-values refer to each individual acid.

A further embodiment of the present invention stipulates that the cleaning medium is consisting of sulphuric acid having preferably a concentration of 94 to 98 wt.-% is used as sole acid during step ii). As explained above the acid may be an aqueous solution, this means that the acid may contain water.

Minor amounts of the carrier medium can still adhere to the article after step v). According to a further preferred embodiment of the present invention the method comprises an additional step vi) of rinsing residual foreign material residues and/or degradation products thereof from the article which is carried out after step v). The rinsing is preferably carried out with water.

In a further preferred embodiment of the present invention the method is conducted continuously and preferably the carrier medium after separation step v) is reintroduced into the process in step ii); and/or the cleaning medium obtained after step iv) is reintroduced into the process in step ii).

According to another preferred embodiment of the present invention step v) is carried out by a solid liquid separation process, preferably selected from the group consisting of filtration, sieving, centrifugation, preferably by using a hydrocyclone and combinations thereof.

Still another preferred embodiment according to the present invention stipulates that the article is not decomposed or attacked during any of steps i) to vii).

According to a further preferred embodiment of the present invention step ii) is conducted at a temperature in the range from -86°C to 500°C, preferably in the range from 20 to 100°C and more preferably in the range from 20 to 70°C and more preferably at 40°C. The freezing point of pure sulphuric acid is 10°C, but for mixtures of sulphuric acid and water the freezing point can go as low as -86°C. Hence, it is basically possible to conduct the process at very low temperatures.

Still another preferred embodiment of the present invention stipulates that step ii) is conducted for a period of time from 1 to 600 minutes, preferably in the range from 1 to 15 minutes and more preferably in the range from 1 to 10 minutes.

In a further preferred embodiment of the present invention step ii) is conducted with 96 wt.-% sulphuric acid at a temperature in the range from 20 to 70°C, preferably from 20 to 40°C and more preferably for a period of time in the range from 1 to 600 min, 1 to 15 minutes and most preferably from 1 to 10 minutes.

It is believed that the removal of the foreign material follows the Arrhenius equation, which means that increasing of the temperature allows to shorten the process time for step ii) and decreasing the temperatures leads to a prolonged process time for step ii). It is also assumed that the process time for step ii) is highly dependent on the concentration of the acid, the removal of the ink and/or the foreign material occurs faster when applying an acid having a higher concentration than when an acid with a lower concentration is used.

The process may be conducted under increased pressure, which makes it possible to work at higher temperatures, i.e. temperatures above the boiling point of the acid under standard pressure (1013 mbar).

### Use

The present invention also relates to the use of the method as defined above for the recycling of polymers.

In a preferred embodiment, the polymer originates from post-consumer waste or post-industrial waste, post-commercial waste and preferably is a rigid or flexible material.

Such post-consumer, post-commercial, and/or post-industrial waste can be derived from inter alia waste electrical and electronic equipment (WEEE) or end-of-life vehicles (ELV) or from differentiated waste collection schemes like the German DSD system, the Austrian ARA system or the Italian "Raccolta Differenziata" system.

Recycled materials are commercially available, e.g. from Corpela (Italian Consortium for the collection, recovery, recycling of packaging plastic wastes), Resource Plastics Corp. (Brampton, ON), Kruschitz GmbH, Plastics and Recycling (AT), Ecoplast (AT), Vogt Plastik GmbH (DE), mtm plastics GmbH (DE) etc.

### Apparatus

The present invention relates also to an installation for carrying out the method according to the invention, wherein said installation comprises at least a mixer for cleaning medium, carrier medium and article to be cleaned (2) a device for density separation (3), a drying device (5), a filtering device (6) and a device for separating cleaning medium and carrier medium (8).

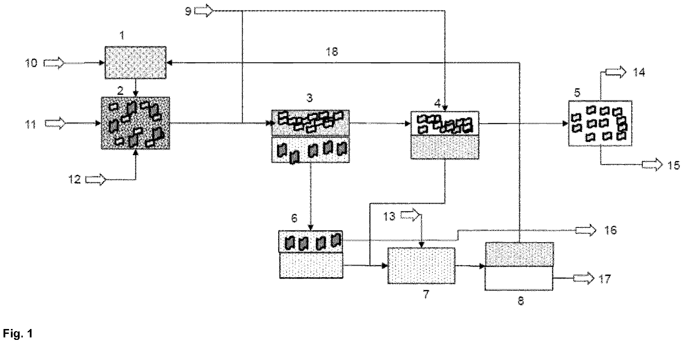

Figures 1 to 4 are illustrating the process and the installation according to the present invention, but are in no way to be regarded as limiting.

Figure 1 shows a preferred embodiment of the process according to the present invention. The article to be cleaned (11) (e.g. pellets or flakes) is added together with the cleaning medium (12) in a mixer (2) to remove the foreign material from the article (11). The carrier medium (10) is put in a different mixer (1) and is subsequently added under mixing into the mixer (2) containing the cleaning medium with the dissolved foreign material (16) and the article (11). After a certain period of time mixing is stopped and time is given for separating the carrier medium including the cleaned article and the cleaning medium including the foreign material (16). The separation can take place in mixer (2) or in a separate device (3), preferably by the different density of the cleaning medium and the carrier medium. After the separation the carrier medium containing the cleaned article may be transferred to a filtering and washing device (4) and the cleaning medium containing the foreign material (16) may be transferred to a filtering device (6). The article from (4) free from foreign material (16) may be rinsed with water (9) in the filtering and washing device (4) and subsequently the washing water and the carrier medium may be transferred, optionally together with the cleaning medium from filtering device (6), into a container for neutralization (7). The remaining article containing washing water, but free from foreign material may be transferred to a drying device (5) where the cleaned article (15) may be separated from the washing water, which is removed as condensate (14). The filtrates from (4) and (6), which contain the dilute cleaning and carrier medium are collected in container (7). In this container (7) the mixture is treated with a base (13), preferably calcium hydroxide or aqueous ammonia, thereby neutralizing acid components. Subsequently the neutralized mixture containing neutralized carrier medium and water may be transferred to a container (8) for separating cleaning medium and carrier medium. The separation can also be performed in container (7). The waste water (17) is removed from the process and the carried medium may be transferred for re-use to mixer (1).

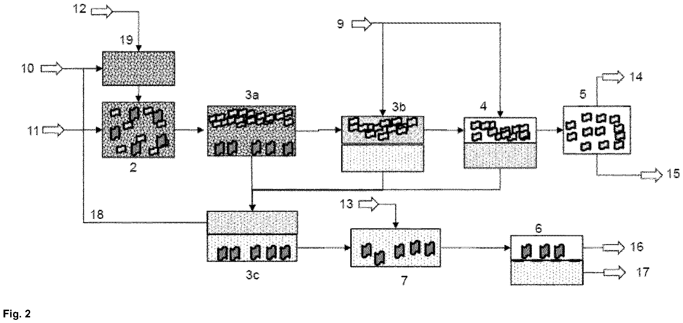

Figure 2 illustrates another preferred embodiment of the process according to the present invention, which is in particular suited for the situation where the cleaning medium, which is used in far higher quantities than required for chemical and physical chemical reasons, is highly reactive, expensive and difficult to recover. In said embodiment a stable emulsion of the cleaning medium and the carrier medium is formed in an emulsifier (19). The achieved dilution of the cleaning medium allows to moderate the cleaning rate and renders the process, in many instances, more controllable and more efficient.

According to said embodiment the emulsion will have a perceived density which is proportional to the quantity and density of the individual medium components. The emulsion will have at most 3 phases once the cleaning has been completed.
1) A light solid phase under the upper surface of the emulsion, the solid particles having a density lower than the that of the emulsion;
2) a heavy solid phase at the lower surface of the emulsion, where the solid particles have a density which is higher than the emulsion; and
3) a continuous emulsion phase.

In a first step according to said embodiment of the present invention carrier medium (10) and cleaning medium (12) are put in a device for emulsification (19). The article to be cleaned (11) is put together with the emulsion of the carrier medium (10) and cleaning medium (12) in mixer (2). After a certain period of time mixing is stopped and time is given for separating the carrier medium including the cleaned article and the cleaning medium including the foreign material (16). The separation can take place in mixer (2) or in a separate device (3a), preferably by the different density of the solid articles versus the apparent density of the emulsion as described above. After the separation in device (3a) the cleaned article is transferred together with some emulsion (= parts of the carrier and cleaning medium) into a second device for separation (3b). Water is added to device (3b) causing the emulsion to separate into a carrier phase which contains the cleaned article. The second solid phase containing the foreign and the remaining liquid phase (= mainly carrier medium from device (3a) is transferred into a third separating device (3c). After separation of the phases in device (3b) the upper phase containing the carrier medium and the cleaned article may be transferred to filtering and washing device (4) and the lower phase may be transferred to the third separating device (3c). In the filtering and washing device (4) the article (15) free from foreign material (16) may be rinsed with water (9) and subsequently parts of the washing water and the carrier medium may be transferred into separating device (3c). The remaining washing water containing the article (15) free from foreign material (16) may be transferred to a drying device (5) where the cleaned article (15) may be separated from the washing water, which is removed as condensate (14).

After separating the phases in separating device (3c) the upper phase (= recycled carrier medium (18)) may be transferred for re-use to emulsifier (19). The lower phase containing the remaining dilute cleaning solution and the foreign material (16) are transferred into a container for neutralization and a base (13) may be added. The neutralized mixture is transferred from container (7) into a filtration device (6) and foreign material (16) and waste water (17) are separated.

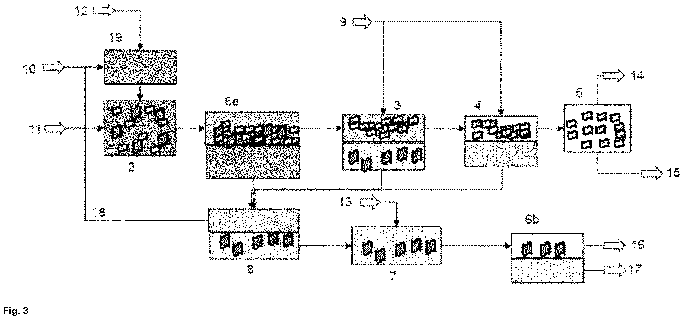

The embodiment of the process according to the present invention illustrated in Figure 3 is very similar to that according to Figure 2. The article to be cleaned (11) is also mixed together with an emulsion made of the carrier medium and the cleaning medium, but after the mixing step the emulsion containing the solid constituents (= foreign material and article to be cleaned) is first filtered. The solid filter cake, containing parts of the emulsion as residual moisture as well as the foreign material and cleaned article, may be transferred to a separating device (3) in which the emulsion is broken. The density of the heavier medium phase containing the diluted cleaning medium, can be adjusted by addition of an appropriate material (in the case of sulphuric acid as cleaning agent that would be water). The foreign material with a density higher than the dilute cleaning medium is transferred to a separator (8). The filtrate from filtering device (6) and the lower phase from device (3) may be transferred to a separator (8) and further processed as already described above. The upper phase from device (3) may be transferred to a filtering and washing device (4) and be further processed as described for the embodiments according to Figure 2.

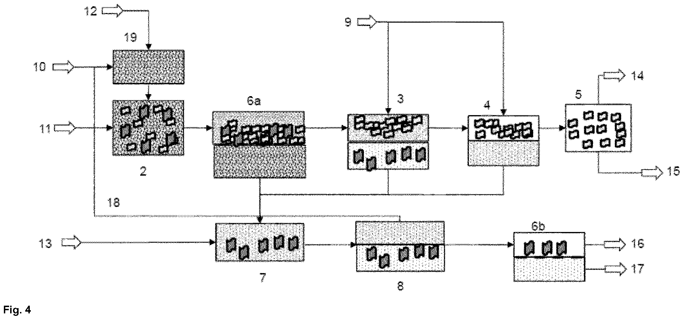

Figure 4 illustrates still a further preferred embodiment of the process according to the present invention. The difference to the embodiment illustrated in Figure 3 is that the filtrate from the filtering device (6a) is transferred directly in a container for neutralization (7). The lower phase from separating device (3) and filtering and washing device (4) may also be transferred to container (7). After neutralisation with a base (13) the carrier medium and the neutralised cleaning medium may be separated in separator (8). The recycled carrier medium may be transferred for re-use to emulsifying device (19) and the foreign material (16) may be separated from waste water in a filtering device (6b).

### List of reference signs

**(1):** Mixer for carrier medium
**(2):** Mixer for cleaning medium, carrier medium and article to be cleaned
**(3):** Device for density separation
**(4):** Filtering and washing device
**(5):** Drying device
**(6):** Filtering device
**(7):** Container for neutralization
**(8):** Separator for cleaning medium and carrier medium
**(9):** Water
**(10):** Carrier medium
**(11):** Article to be cleaned
**(12):** Cleaning medium
**(13):** Base
**(14):** Condensate
**(15):** Cleaned article
**(16):** Foreign material
**(17):** Waste Water
**(18):** Recycled carrier medium
**(19):** Device for emulsification of carrier medium and cleaning medium

The invention will now be described with reference to the following non-limiting examples.

### Experimental Part

### A. Materials used

### LDPE-bags

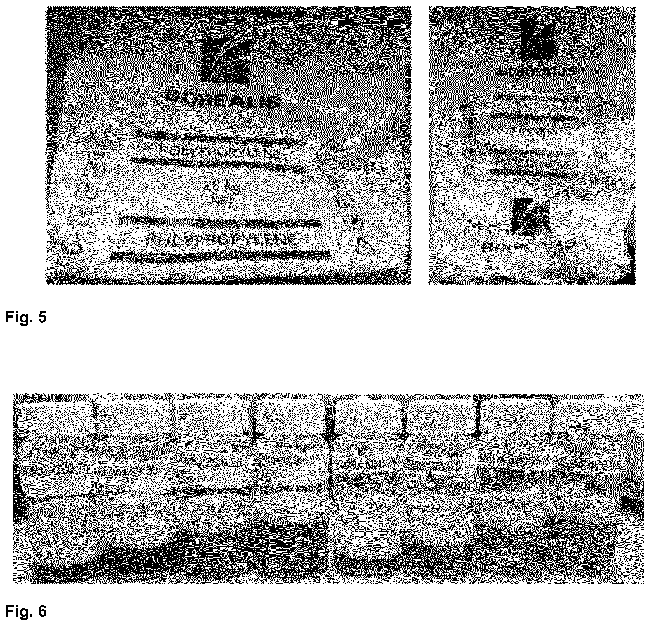

LDPE-bags imprinted with blue, green and red ink and paper labels fixed with glue, commercially available from Borealis (see Figure 5).

### H₂SO₄

H₂SO₄ (96 %, commercially available from Sigma Aldrich Corporation), H₂SO₄ having a lower concentration was obtained by dilution with distilled water.

### Mineral oil

The oil used for the testing was a mineral oil, commercially named Finavestan A360B, supplied by Total Belgium (density at 15°C = 870 kg/m³).

### B. Deinking Trials

LDPE-bags as described above printed with ink were cryo-milled and treated with a mixture of mineral oil and sulphuric acid at different concentrations and different ratios oil to acid. The desired volume of sulphuric acid was added to a vial with a magnetic stirrer that contained the cryo-milled sample. The remaining missing volume of oil was added on top and the vial was shaken for a couple of seconds. Tests were performed with different oil to acid ratio and with two concentrations of sulphuric acid (96 % and 70 %). In these tests, 0.5 g of cryo-milled LDPE bags, 2.5, 5, 7.5 and 9 mL of acid and 7.5, 5, 2.5 and 1 mL of oil were used. All tests were made at room temperature and the results are summarized in below Table 1.

**Table 1: Summary of deinking and separation of LDPE bags in oil-acid mixture.**

| **Test** | **Conc. H₂SO₄ [%]** | **Ratio oil:H₂SO₄** | **Visual evaluation** |
|---|---|---|---|
| 1 | 96 | 75:25 | All inks removed |
| 2 | 96 | 50:50 | All inks removed |
| 3 | 96 | 25:75 | All inks removed |
| 4 | 96 | 10:90 | All inks removed |
| 5 | 70 | 75:25 | Green ink not fully removed |
| 6 | 70 | 50:50 | Green ink not fully removed |
| 7 | 70 | 25:75 | Green ink not fully removed |
| 8 | 70 | 10:90 | Green ink not fully removed |

The visual observation showed a complete deinking of the LDPE bags in the case of use of 96 % sulphuric acid. In the 70 % sulphuric acid trials, the green ink is not fully removed. In both cases (96 % and 70 %), the sample is in the oil phase (Figures 6a and 6b).

The same procedure was applied for the trials summarized in Table 2. The oil: acid ratio was kept constant, but acids with different concentration were used. 0.5 g of cryo-milled LDPE bags, 1 mL of sulphuric acid and 9 mL of mineral oil were used and all tests were made at room temperature.

**Table 2: Summary of deinking and separation of LDPE bags in oil-acid mixture.**

| **Test** | **Conc. H₂SO₄ [%]** | **Ratio oil:H₂SO₄** | **Time to settle [min]** | **Visual evaluation** |
|---|---|---|---|---|
| 9 | 96 | 90:10 | 30 | All inks removed |
| 10 | 90 | 90:10 | 30 | All inks removed |
| 11 | 70 | 90:10 | 15 | Green ink not fully removed |
| 12 | 50 | 90:10 | 4 | No inks removed |

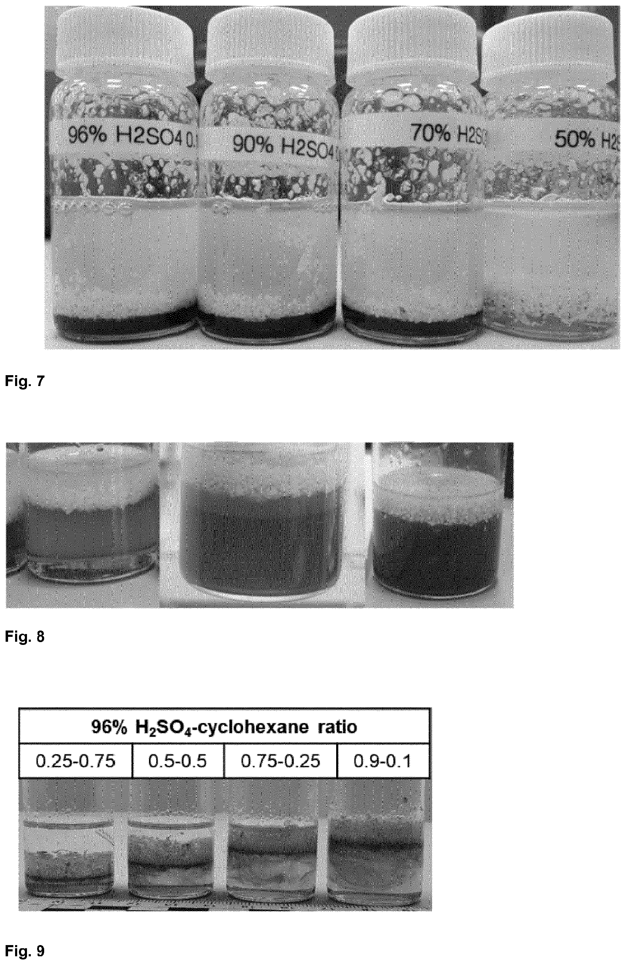

The visual evaluation of these tests gave similar results than the previous one in terms of ink removal. Lowering the sulphuric acid concentration reduces the effectiveness of deinking. On the other hand, the more diluted is the solution, the faster it settles (see Figure 7).

Further tests were made in order to investigate the reuse of the acid and its effectiveness on deinking. For these tests, the oil to acid ratio of 25:75 and a concentration of 96 % sulphuric acid were used. 0.5 g of cryo-milled LDPE bags, 7.5 mL of acid and 2.5 mL of oil were used. All tests were made at room temperature. After a couple of minutes, the acid portion is taken out and added to a new vial containing inked cryo-milled LDPE bags and 2.5 mL of oil. This step is repeated after an additional time.

**Table 3: Summary of tests on the reuse of sulphuric acid for deinking.**

| **Test** | **Reuse** | **Conc. H₂SO₄ [%]** | **Ratio oil:H₂SO₄** | **Visual evaluation** |
|---|---|---|---|---|
| 13 | 0 | 96 | 25:75 | All inks removed H₂SO₄ light red |
| 14 | 1 | 96 | 25:75 | All inks removed H₂SO₄ red |
| 15 | 2 | 96 | 25:75 | All inks removed H₂SO₄ dark red |

The reuse of the sulphuric acid proved to be efficient, and the separation of the cryo-milled sample does not take any longer from test 13 to test 15 (see Figure 8).

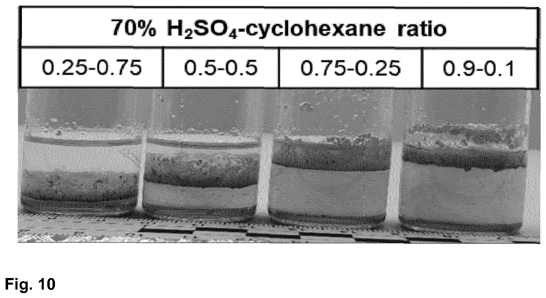

Additional tests were performed, substituting the oil as carrier phase by cyclohexane, an organic solvent. These tests have been carried out following the procedure previously described for Table 1. The results are shown in Table 4 and Figures 9 and 10.

**Table 4: Summary of tests with H₂SO₄-cyclohexane mixtures.**

| **Test** | **Conc. H₂SO₄ [%]** | **Ratio cyclohexane: H₂SO₄** | **Time to settle [s]** | **Visual evaluation** |
|---|---|---|---|---|
| 16 | 96 | 75:25 | <1 | All inks removed |
| 17 | 96 | 50:50 | <1 | All inks removed |
| 18 | 96 | 25:75 | <1 | All inks removed |
| 19 | 96 | 10:90 | <1 | All inks removed |
| 20 | 70 | 75:25 | <1 | Green ink not fully removed |
| 21 | 70 | 50:50 | <1 | Green ink not fully removed |
| 22 | 70 | 25:75 | <1 | Green ink not fully removed |
| 23 | 70 | 10:90 | <1 | Green ink not fully removed Plastic agglomerates |

A fast, quasi-instantaneous, separation between the two phases is observed. All inks are removed as seen previously with the 96 % sulphuric acid, whereas the green ink is not fully removed for the 70 % sulphuric acid as cleaning medium.

## Claims

1. A method for removing a foreign material from the surface of an article comprising the following steps:
i) providing an article having a surface covered at least partly with a foreign material;
ii) contacting the article provided in step i) with a cleaning medium being an acid having a pKa in the range from -10 to 7 having a minimum concentration of 1 wt.-% and/or an amphoter and with a carrier medium having a density different from the density of the cleaning medium to obtain a mixture comprising the foreign material solved and/or dispersed in the cleaning medium, the carrier medium and the article free from the foreign material;
iii) allowing the mixture obtained in step ii) to separate, to obtain a heterophasic emulsion comprising at least a first phase comprising the carrier medium and the article free from the foreign material and a second phase comprising the cleaning medium and the foreign material solved and/or dispersed therein;
iv) separating the phases obtained in step iii); and
v) separating the article free from the foreign material from the carrier medium.

2. The method according to claim 1, **characterized in that**,
the article in step ii) is first contacted with the cleaning medium and afterwards with the carrier medium, preferably the article is first contacted with the cleaning medium until the foreign material is completely solved or dispersed in the cleaning medium.

3. The method according to claim 1, **characterized in that**,
the article in step ii) is contacted simultaneously with the cleaning medium and the carrier medium.

4. The method according to claim 2, **characterized in that**,
the mixture comprising the cleaning medium and the article is subjected to sheer forces induced by mechanical mixing, preferably by agitation, pump-around loop, mechanical grinding, extrusion, addition of abrasive agents and/or is treated with ultrasound before contacting the mixture with the carrier medium.

5. The method according to claim 3, **characterized in that**,
the mixture comprising cleaning medium, carrier medium and article is subjected to sheer forces induced by a mechanical mixing, preferably by agitation, pump-around loop, mechanical grinding, extrusion, addition of abrasive agents and/or is treated with ultrasound before step iii); and/or
an agent for breaking the emulsion, preferably water is/are added before or during step iv); and/or
the density of the carrier medium is lower than the density of the cleaning medium.

6. The method according to any one of the preceding claims, **characterized in that**,
the foreign material is selected from the group consisting of ink, labels, paper, paper board, card board, mono- or multilayer films, organic coatings, inorganic coatings, preferably vapour deposed metallic materials and non-metallic materials or aluminium, pigments, adhesives, glues, metals, organic waste, non-organic waste, odorous materials and mixtures thereof.

7. The method according to any one of the preceding claims, **characterized in that**,
the cleaning medium is an acid selected from the group consisting of oleum, sulphuric acid, phosphoric acid, nitric acid, hydrochloric acid, hydrofluoric acid, boric acid, adipic acid, formic acid, acetic acid, and mixtures thereof and preferably is sulphuric acid; and/or
the carrier medium is an oil preferably selected from the group consisting of mineral oil, silicon oil, vegetable oil and mixtures thereof and more preferably is mineral oil or is an organic solvent, preferably cyclohexane.

8. The method according to any one of the preceding claims, **characterized in that**,
at least a part of the surface of the article comprises a polymer, preferably the surface of the article consists of a polymer, and most preferably the whole article consists of a polymer, whereby said polymer is preferably selected from the group consisting of polyolefins, preferably polyethylene and/or polypropylene, polyvinyl chloride, polyethylene terephthalate, polyamides, preferably PA 6, PA 66 and mixtures thereof; or
at least a part of the surface of the article comprises a material selected from the group consisting of glass, ceramics, steel and mixtures thereof; and/or
the article originates from post-consumer waste or post-industrial waste, post-commercial waste and preferably is provided in shredded form, flaked form or pelletized form.

9. The method according to any one of the preceding claims, **characterized in that**,
the density difference between the carrier medium and the cleaning medium is at least 550 kg/m³, preferably is in the range from 500 to 1800 kg/m³ and more preferably is in the range from 650 to 1000 kg/m³.

10. The method according to any one of the preceding claims, **characterized in that**,
the cleaning medium is an acid having
a concentration in the range from 10 to 100 wt.-%, preferably from 45 to 98 wt.-% and more preferably is sulphuric acid having a concentration of 94 to 98 wt.-%, more preferably having a concentration of 96 wt.-%; and/or
a pKa in the range from -5 to 5 and preferably from -5 to 0; and/or
a minimum concentration of 10 wt.-% and preferably of 25 wt.-%.

11. The method according to any one of the preceding claims, **characterized in that**,
the cleaning medium is consisting of sulphuric acid having preferably a concentration of 94 to 100 wt.-%, preferably form 94 to 98 wt.-%.

12. The method according to any one of the preceding claims, **characterized in that**,
the method comprises an additional step vi) of rinsing residual foreign material residues and/or degradation products thereof from the article which is carried out after step v).

13. The method according to any one of the preceding claims, **characterized in that**,
the method is conducted continuously and preferably the carrier medium obtained after separation step (v) is reintroduced into the process in step (ii); and/or the cleaning medium obtained after step (iv) is reintroduced into the process in step (ii).

14. The method according to any one of the preceding claims, **characterized in that**,
step v) is carried out by a solid liquid separation process, preferably selected from the group consisting of filtration, sieving, centrifugation, preferably by using a hydrocyclone and combinations thereof; and/or
the article is not decomposed or attacked during any of steps i) to vi).

15. An installation for carrying out the method according to any one of claims 1 to 14, wherein said installation comprises at least an mixer for cleaning medium, carrier medium and article to be cleaned (2) a device for density separation (3), a drying device (5), a filtering device (6) and a device for separating cleaning medium and carrier medium (8).
